(19) Europäisches Patentamt / European Patent Office / Office européen des brevets

(11) **EP 4 379 843 A1**

(12) **EUROPEAN PATENT APPLICATION**
published in accordance with Art. 153(4) EPC

(43) Date of publication:
**05.06.2024  Bulletin 2024/23**

(21) Application number: **23812073.7**

(22) Date of filing: **19.05.2023**

(51) International Patent Classification (IPC):
*H01M 4/13* (2010.01)         *H01M 4/62* (2006.01)
*H01M 4/139* (2010.01)       *H01M 4/04* (2006.01)
*H01M 10/052* (2010.01)     *H01M 4/02* (2006.01)

(52) Cooperative Patent Classification (CPC):
H01M 4/02; H01M 4/04; H01M 4/13; H01M 4/139;
H01M 4/62; H01M 10/052

(86) International application number:
**PCT/KR2023/006833**

(87) International publication number:
**WO 2023/229299 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  24.05.2022  KR 20220063562
                         15.05.2023  KR 20230062527

(71) Applicant: **LG Chem, Ltd.**
**Yeongdeungpo-gu**
**Seoul 07336 (KR)**

(72) Inventors:
• **LEE, Kyoungsoo**
  **Daejeon 34122 (KR)**
• **YU, Ingyoung**
  **Daejeon 34122 (KR)**
• **JIN, Sun Mi**
  **Daejeon 34122 (KR)**

(74) Representative: **Hoffmann Eitle**
**Patent- und Rechtsanwälte PartmbB**
**Arabellastraße 30**
**81925 München (DE)**

(54) **ELECTRODE FOR LITHIUM SECONDARY BATTERY, MANUFACTURING METHOD THEREFOR, AND LITHIUM SECONDARY BATTERY COMPRISING SAME**

(57)    An electrode for a lithium secondary battery includes an electrode substrate with a first porous layer formed on the electrode substrate and a second porous layer formed on the first porous layer. The first porous layer has a porosity of 10% or less and the second porous layer formed on the first porous layer has a porosity of 30% or more. The second porous layer contains a binder resin and inorganic fine particles. The manufacturing method of the same and a lithium secondary battery including the same is also provided.

EP 4 379 843 A1

**Description**

CROSS-REFERENCE TO RELATED APPLICATIONS

This application is a national phase entry under 35 U.S.C. § 371 of International Application No. PCT/KR2023/006833 filed on May 19, 2023, which claims priority to Korean Patent Application No. 10-2022-0063562 filed on May 24, 2022 and Korean Patent Application No. 10-2023-0062527 filed on May 15, 2023, the disclosures of which are incorporated herein by reference in their entirety.

TECHNICAL FIELD

The present disclosure relates to an electrode for a lithium secondary battery that includes a porous layer formed on the electrode and thus can realize high insulation characteristics and low resistance characteristics, a manufacturing method of the same, and a lithium secondary battery including the same.

BACKGROUND ART

As the development of technology and the demand for mobile devices has increased, the demand for a chargeable/dischargeable secondary battery as an energy source has also rapidly increased. Thus, various research into secondary batteries capable of meeting various needs has been carried out accordingly. Also, a chargeable/dischargeable secondary battery has attracted considerable attention as a power source for an electric vehicle (EV), a hybrid electric vehicle (HEV), a plug-in hybrid electric vehicle (Plug-in HEV) and the like, which have been developed to solve air pollution and the like, caused by existing gasoline and diesel vehicles using fossil fuel.

Lithium secondary batteries explode with intense heat generation if a short circuit occurs due to contact between the cathode and the anode. The porous separator of the secondary batteries exhibits extreme heat shrinkage behavior at temperatures of about 100°C or more due to material characteristics and manufacturing process characteristics including stretching, which may cause a short circuit between the cathode and the anode. In order to solve such battery safety issues, a separator has been proposed in which a porous coating layer, formed of a mixture of insulating filler particles and a binder polymer, is provided on a porous substrate, and a material having a shutdown function is added to the porous coating layer.

However, in the case of a conventional separator, configured to form a porous coating layer having inorganic particles on a porous substrate, there are problems in that it does not have a separate adhesive layer. Thus, the interfacial adhesive force with the counter electrode is weak, which deteriorates the processability of the battery assembly. Further, the expansion and contraction of the electrodes causes interfacial peeling due to insufficient adhesive force, which deteriorates the life characteristics of the battery.

Therefore, there is a need to study a lithium secondary battery including a separator that realizes excellent adhesive force and battery life characteristics.

TECHNICAL PROBLEM

It is an object of the present disclosure to provide an electrode for lithium secondary batteries that can realize high insulation characteristic and low resistance characteristic.

It is another object of the present disclosure to provide a method for manufacturing the electrode for a lithium secondary battery.

It is yet another object of the present disclosure to provide a lithium secondary battery comprising the electrode for a lithium secondary battery.

TECHNICAL SOLUTION

One aspect of the present disclosure provides an electrode for a lithium secondary battery comprising: an electrode substrate; a first porous layer formed on the electrode substrate, having a porosity of 10% or less; and a second porous layer formed on the first porous layer, containing a binder resin and inorganic fine particles, having a porosity of 30% or more.

Another aspect of the present disclosure, provides a method for manufacturing an electrode for a lithium secondary battery, comprising: applying a composition for forming a first porous layer on an electrode substrate and drying it, thereby forming a first porous layer on at least one surface of the electrode substrate; and applying a composition for forming a second porous layer including a binder resin and inorganic fine particles on the first porous layer and drying it, thereby forming a second porous layer, wherein the first porous layer has a porosity of 10% or less, and wherein the second porous layer has a porosity of 30% or more.

Yet another aspect of the present disclosure provides a lithium secondary battery, comprising the above-mentioned electrode for a lithium secondary battery.

DETAILED DESCRIPTION

Now, an electrode for a lithium secondary battery, a manufacturing method of the same, a lithium secondary battery including the same, and the like according to embodiments of the present disclosure will be described in detail.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own invention in the best way.

Unless defined otherwise, all technical and scientific terms used herein have the same meaning as commonly understood by one of ordinary skill in the art to which this invention belongs. The terms used herein are for the purpose of describing specific embodiments only and is not intended to limit the scope of the invention.

The singular forms "a," "an" and "the" used herein are intended to include plural forms, unless the context clearly indicates otherwise.

It should be understood that the terms "comprise," "include", "have", etc. are used herein to specify the presence of stated feature, region, integer, step, action, element and/or component, but do not preclude the presence or addition of other feature, region, integer, step, action, element, component and/or group.

While the present disclosure can be modified in various ways and take on various alternative forms, specific embodiments thereof are illustrated and described in detail below. However, it should be understood that there is no intent to limit the present disclosure to the particular forms disclosed, but on the contrary, the present disclosure covers all modifications, equivalents, and alternatives falling within the spirit and scope of the present disclosure.

In describing a position relationship, for example, when the position relationship is described as 'upon~', 'above~', 'below~', and 'next to~', one or more portions may be arranged between two other portions unless 'just' or 'direct' is used.

In describing a time relationship, for example, when the temporal order is described as 'after~', 'subsequent~', 'next~', and 'before~', a case which is not continuous may be included unless 'just' or 'direct' is used.

As used herein, the term 'at least one' should be understood to include any and all combinations of one or more of the associated listed items.

One embodiment of the present invention provides an electrode for a lithium secondary battery comprising: an electrode substrate; a first porous layer, formed on the electrode substrate, having a porosity of 10% or less; and a second porous layer formed on the first porous layer, containing a binder resin and inorganic fine particles, having a porosity of 30% or more.

The present disclosure provides an electrode for a lithium secondary battery including both a first porous layer having a porosity of 10% or less and a second porous layer containing a first binder resin and inorganic fine particles and having a porosity of 30% or more.

Specifically, the separator used in the lithium secondary battery is formed directly on the electrode substrate without a porous substrate, a first porous layer having a low porosity is coated onto the interface in contact with the electrode, whereby even if the interfacial contact area increases and the electrode expands and contracts, the adhesive force is maintained. Thus, realizing excellent battery life characteristics.

In addition, the electrode for a lithium secondary battery according to the present disclosure comprises a first porous layer, formed on the electrode substrate, having a porosity of 10% or less and a second porous layer formed on the first porous layer, containing a binder resin and inorganic fine particles, having a porosity of 30% or more. The dense structure of the first porous layer having a low porosity prevents the movement of the inorganic fine particles and the binder resin of the second porous layer, generated during the drying process to the lower electrode interface, to thereby suppress the increase in resistance at the electrode interface, and at the same time, realize low resistance characteristics by the ion conductive binder resin within the first porous layer, and the completed the invention.

The electrode for a lithium secondary battery may be a cathode for a lithium secondary battery or may be an anode for a lithium secondary battery.

In the electrode for a lithium secondary battery of the above embodiment, a difference between the porosity of the first porous layer and the porosity of the second porous layer may be 20% or more.

The difference between the porosity of the first porous layer and the porosity of the second porous layer can be calculated according to the following Equation 1.

Difference between the porosity of the first porous layer (%) and the porosity of the second porous layer (%) = Porosity of the second porous layer (%) - Porosity of the first porous layer (%)　　　　[Equation 1]

The difference between the porosity of the first porous layer and the porosity of the second porous layer may be, specifically, 20% or more, 30% or more, 40% or more, 50% or more, 99% or less, 90% or less, 80% or less, 70% or less, 60% or less, 55% or less, and may be 20% or more and 99% or less, 20% or more and 90% or less, 20% or more and 80% or less, 20% or more and 70% or less, 20% or more and 60% or less, 20% or more and 55% or less, 30% or more and 99% or less, 30% or more and 90% or less, 30% or more and 80% or less, 30% or more and 70% or less, 30% or more and 60% or less, 30% or more and 55% or less, 40% or more and 99% or less, 40% or more and 90% or less, 40% or more and 80% or less, 40% or more and 70% or less, 40% or more and 60% or less, 40% or more and 55% or less, 50% or more and 99% or less, 50% or more and 90% or less, 50% or more and 80% or less, 50% or more and 70% or less, 50% or more and 60% or less, or 50% or more and 55% or less.

As the difference between the porosity of the first porous layer and the porosity of the second porous layer satisfies 20% or more, excellent battery characteristics and insulation characteristics can be realized.

If the difference between the porosity of the first porous layer and the porosity of the second porous layer is less than 20%, the porosity of the first porous layer becomes too large and ion conduction becomes difficult to occur, or the porosity of the second porous layer becomes too small and the resistance during ion conduction may increase.

In addition, if the difference between the porosity of the first porous layer and the porosity of the second porous layer is too large, technical problems may arise in that an empty space having a low dielectric constant increases. Thus, insulation characteristics are deteriorated.

Specifically, in the electrode for a lithium secondary battery of one embodiment, the porosity of the second porous layer may be 30% or more, 30% or more and 90% or less, 40% or more and 90% or less, 40% or more and 80% or less, or may be 40% or more and 70% or less, 40% or more and 60% or less, 50% or more and 60% or less.

The porosity of the second porous layer can be realized according to the composition of the second porous layer, which will be described later. As the porosity of the second porous layer is 30% or more and 90% or less, it is possible to achieve the effect of enabling ion conduction through the pores.

If the porosity of the second porous layer is less than 30%, resistance during ion conduction may increase. If the porosity of the second porous layer is more than 90%, technical problems may arise that an empty space having a low dielectric constant increases. Thus, insulation characteristics are deteriorated.

The porosity can be calculated from the density/ratio of the inorganic fine particles in the slurry, the density/ratio of the binder, and the weight (loading amount) and thickness of the measured sample.

Alternatively, the porosity can be calculated according to the following Equation 2 using the ratio between the density obtained by measuring the volume and mass of the second porous layer with respect to a sample coated with the composition onto an electrode of a certain area and the theoretical density of the solid content of the coating composition.

[Equation 2]

$$\text{Porosity (\%)} = \{1 - (\text{Actual density})/(\text{Theoretical density})\} \times 100.$$

Specifically, in the electrode for a lithium secondary battery of one embodiment, the porosity of the first porous layer may be 10% or less, 0.01% or more, 0.1% or more, 1% or more, 5% or more, 7% or more, or may be 0.01% or more and 10% or less, 0.1% or more and 10% or less, 1% or more and 10% or less, 5% or more and 10% or less, and 7% or more and 10% or less.

The porosity of the first porous layer may be realized according to the composition of the first porous layer, which will be described later. As the porosity of the first porous layer is 10% or less, a dense structure is formed between the ion conductive polymers, so that ion conduction occurs easily and excellent battery characteristics can be realized.

If the porosity of the first porous layer is more than 10%, a less dense structure is formed in which ion conduction is difficult, and as the porosity increases, the capability of suppressing penetration of the inorganic fine particles and the binder resin of the porous layer into the electrode can also be reduced.

The porosity can be calculated from the density/ratio of the inorganic fine particles in the slurry, the density/ratio of the binder, and the weight (loading amount) and thickness of the measured sample.

Alternatively, the porosity can be calculated according to the following Equation 2 using the ratio between the density obtained by measuring the volume and mass of the first porous layer with respect to a sample coated with the above composition onto an electrode of a certain area and the theoretical density of the solids in the coating composition.

[Equation 2]

Porosity (%)= {1 - (Actual density)/(Theoretical density)} x 100.

In the electrode for a lithium secondary battery of one embodiment, the first porous layer may include an ion conductive polymer. As the first porous layer includes an ion conductive polymer, conductivity can be imparted to the second porous layer to minimize performance deterioration of the lithium secondary battery of the one embodiment.

If the first porous layer does not contain an ion conductive polymer, a problem may arise in that ion conductivity is not secured between the electrode substrate and the first porous layer.

The ion conductive polymer may be a polymer containing a heterocyclic aromatic compound as a monomer. The heterocyclic aromatic compound may mean an aromatic compound having a ring structure including at least one of O, N, Si, and S as heteroatoms.

In the present specification, aromatic is a property that satisfies Huckle's Rule, and a compound can be defined as aromatic if all of the following three conditions are satisfied according to Huckle's Rule.

1) There must be 4n+2 electrons that are completely conjugated by empty p-orbitals, unsaturated bonds, lone electron pairs, etc.
2) 4n+2 electrons must form planar isomers and form a ring structure.
3) All atoms of the ring must be able to participate in conjugation.

Examples of the heterocyclic aromatic compound include thiophene, furan, pyrrole, imidazole, thiazole, oxazole, oxadiazole, triazole, pyridyl group, bipyridine, pyrimidine, triazine, acridine, pyridazine, pyrazine, quinoline, quinazoline, quinoxaline, phthalazine, pyridopyrimidine, pyridopyrazine, pyrazino pyrazine, isoquinoline, indole, carbazole, benzoxazole, benzoimidazole, benzothiazole, benzocarbazole, benzothiophene, dibenzothiophene, benzofuranyl group, phenanthroline, isoxazole, thiadiazole, phenothiazine, dibenzofuran, and the like, but are not limited thereto. The heterocyclic aromatic compound may be substituted or unsubstituted.

More specifically, the heterocyclic aromatic compound may include one or more heterocyclic aromatic compounds selected from the group consisting of thiophene, pyrrole, aniline, and a derivative thereof. That is, the ion conductive polymer may be a polymer containing as a monomer at least one heterocyclic aromatic compound selected from the group consisting of thiophene, pyrrole, aniline, and a derivative thereof.

For example, the ion conductive polymer may be a polymer containing as a monomer at least one compound selected from the group consisting of 3,4-ethylene-dioxythiophene (EDOT), pyrrole, aniline, and thiophene.

The ion conductive polymer may include one or more ion conductive polymers selected from the group consisting of polyethylene oxide, polyvinylidene fluoride, polyvinylidene fluoride-hexafluoropropylene, polymethyl(meth)acrylate, polyvinyl chloride, polyvinyl alcohol, polyacrylonitrile, polyacrylic acid, polyethyl meth(acrylate), and polycaprolactone.

The ion conductive polymer may have a weight average molecular weight of 50,000 g/mol or more and 5,000,000 g/mol or less.

Specifically, the ion conductive polymer may have a weight average molecular weight of 50,000 g/mol or more, 100,000 g/mol or more, 200,000 g/mol or more, 300,000 g/mol or more, 500,000 g/mol or more, 5,000,000 g/mol or less, 4,000,000 g/mol or less, 3,000,000 g/mol or less, 2,000,000 g/mol or less, 1,000,000 g/mol or less, 50,000 g/mol or more and 5,000,000 g/mol or less, 50,000 g/mol or more and 4,000,000 g/mol or less, 50,000 g/mol or more and 3,000,000 g/mol or less, 50,000 g/mol or more and 2,000,000 g/mol or less, 50,000 g/mol or more and 1,000,000 g/mol or less, 100,000 g/mol or more and 5,000,000 g/mol or less, 100,000 g/mol or more and 4,000,000 g/mol or less, 100,000 g/mol or more and 3,000,000 g/mol or less, 100,000 g/mol or more and 2,000,000 g/mol or less, 100,000 g/mol or more and 1,000,000 g/mol or less, 200,000 g/mol or more and 5,000,000 g/mol or less, 200,000 g/mol or more and 4,000,000 g/mol or less, 200,000 g/mol or more and 3,000,000 g/mol or less, 200,000 g/mol or more and 2,000,000 g/mol or less, 200,000 g/mol or more 1,000,000 g/mol or less, 300,000 g/mol or more 5,000,000 g/mol or less, 300,000 g/mol or more and 4,000,000 g/mol or less, 300,000 g/mol or more and 3,000,000 g/mol or less, 300,000 g/mol or more and 2,000,000 g/mol or less, 300,000 g/mol or more and 1,000,000 g/mol or less, 500,000 g/mol or more and 5,000,000 g/mol or less, 500,000 g/mol or more and 4,000,000 g/mol or less, 500,000 g/mol or more and 3,000,000 g/mol or less, 500,000 g/mol or more and 2,000,000 g/mol or less, or 500,000 g/mol or more and 1,000,000 g/mol or less.

When the weight average molecular weight of the ion conductive polymer is too small, the viscosity decreases and the penetration of the binder into the porous electrode surface increases, so that the interfacial resistance may increase. When the weight average molecular weight of the ion conductive polymer is too large, the chain length of the ion conductive polymer matrix becomes long, the impregnation property of an electrolyte solution is low in both amorphous and crystalline regions, and ionic conductivity may decrease.

In addition, the ion conductive polymer may have a dielectric constant of 2 or more and 12 or less.

Specifically, the ion conductive polymer may have a dielectric constant of 2 or more, 4 or more, 12 or less, 10 or less, 8 or less, 2 or more and 12 or less, 2 or more and 10 or less, 2 or more and 8 or less, 4 or more and 12 or less, 4 or more and 10 or less, 4 or more and 8 or less.

If the dielectric constant of the ion conductive polymer is too low, the dissolution properties of the lithium salt may be lowered and the ion conductivity may be lowered. If the dielectric constant of the ion conductive polymer is too high, technical problems may arise in that insulation characteristics are lowered due to a high dielectric constant.

Further, in the electrode for a lithium secondary battery of one embodiment of the present invention, the first porous layer may include a lithium salt. As the first porous layer includes a lithium salt, an amorphous region in the ion conductive polymer can be expanded to increase the diffusion rate of ions, and the impregnation properties of an electrolyte solution can be improved to increase the ion conductivity.

The lithium salt acts as a source of lithium ions in the battery, enables basic operation of the lithium secondary battery, and serves to facilitate the movement of lithium ions between the cathode and the anode.

Specifically, the lithium salt may be at least one lithium salt selected from the group consisting of $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiN(SO_2F)_2$ (LiFSI, lithium bis (fluorosulfonyl)imide), LiCl, LiI, LiTFSi, and $LiB(C_2O4)_2$. Preferably, the lithium salt may be at least one lithium salt selected from the group consisting of $LiPF_6$, LiFSI, and LiTFSi.

In the above embodiment of the present invention, the first porous layer may contain 5 parts by weight or more and 200 parts by weight or less of the lithium salt with respect to 100 parts by weight of the ion conductive polymer.

Specifically, the first porous layer may contain the lithium salt in an amount of 5 parts by weight or more, 10 parts by weight or more, 20 parts by weight or more, 200 parts by weight or less, 100 parts by weight or less, 70 parts by weight or less, 50 parts by weight or less, 30 parts by weight or less, 25 parts by weight or less, 5 parts by weight or more 200 parts by weight or less, 5 parts by weight or more 100 parts by weight or less, 5 parts by weight or more and 70 parts by weight or less, 5 parts by weight or more and 50 parts by weight or less, 5 parts by weight or more and 30 parts by weight or less, 5 parts by weight or more and 25 parts by weight or less, 10 parts by weight or more and 200 parts by weight or less, 10 parts by weight or more and 100 parts by weight or less, 10 parts by weight or more and 70 parts by weight or less, 10 parts by weight or more and 50 parts by weight or less, 10 parts by weight or more and 30 parts by weight or less, 10 parts by weight or more and 25 parts by weight or less, 20 parts by weight or more and 200 parts by weight or less, 20 parts by weight or more and 100 parts by weight or less, 20 parts by weight or more and 70 parts by weight or less, 20 parts by weight or more and 50 parts by weight or less, 20 parts by weight or more and 30 parts by weight or less, or 20 parts by weight or more and 25 parts by weight or less with respect to 100 parts by weight of the ion conductive polymer.

When the first porous layer contains less than 5 parts by weight of the lithium salt with respect to 100 parts by weight of the ion conductive polymer, technical problems may arise in that the absolute concentration of lithium ions decreases and the resistance increases.

Further, when the first porous layer contains more than 200 parts by weight of the lithium salt with respect to 100 parts by weight of the ion conductive polymer, technical problems may arise in that the concentration of the lithium salt increases beyond the degree of dissociation of the ion conductive polymer matrix, and the movement of ions in the ion conductive polymer is obstructed, thereby increasing the resistance.

Moreover, the first porous layer may further include at least one compound of of a nitrile-based compound or an ether-based compound in addition to the lithium salt.

As the first porous layer includes at least one compound of a nitrile-based compound or an ether-based compound, the high dielectric constant, of at least one compound of a nitrile-based compound or an ether-based compound, may lead to improvement in ionic conductivity.

When the first porous layer includes at least one compound of a nitrile-based compound or an ether-based compound in addition to the lithium salt, the above-mentioned lithium salt may be contained in a form of being dissolved in the at least one compound of the nitrile-based compound or the ether-based compound. Specifically, the lithium salt may be contained in at least one compound of the nitrile-based compound or the ether-based compound at a concentration of 0.1 M to 2.0 M. The lithium salt contained in the above concentration range can exhibit excellent electrolyte performance by imparting appropriate conductivity and viscosity.

Specifically, the nitrile-based compound may include at least one nitrile-based compound selected from the group consisting of succinonitrile, adiponitrile, sebaconitrile, acetonitrile), and propionitrile.

The ether-based compound may include at least one ether-based compound selected from the group consisting of dibutyl ether, tetra glyme, diglyme, dimethoxyethane, 2-methylhydrofuran, and tetrahydrofuran.

In the one embodiment, when the first porous layer includes both a lithium salt and at least one compound of the nitrile-based compound or the ether-based compound, the first porous layer may contain 50 parts by weight or more and 1000 parts by weight or less of at least one compound of the nitrile-based compound or the ether-based compound, and a lithium salt with respect to 100 parts by weight of the ion conductive polymer.

Specifically, the first porous layer may contain at least one compound of the nitrile-based compound or the ether-based compound, and a lithium salt in an amount of 50 parts by weight or more, 100 parts by weight or more, 101 parts by weight or more, 200 parts by weight or more, 300 parts by weight or more, 1000 parts by weight or less, 800 parts by weight or less, 500 parts by weight or less, 400 parts by weight or less, 50 parts by weight or more and 1000 parts by weight or less, 100 parts by weight or more and 1000 parts by weight or less, 101 parts by weight or more and 1000 parts by weight or less, 200 parts by weight or more and 1000 parts by weight or less, 300 parts by weight or more and 1000 parts by weight or less, 50 parts by weight or more and 800 parts by weight or less, 100 parts by weight or more and 800 parts by weight or less, 101 parts by weight or more and 800 parts by weight or less, 200 parts by weight or more and 800 parts by weight or less, 300 parts by weight or more and 800 parts by weight or less, 50 parts by weight or more and 500 parts by weight or less, 100 parts by weight or more and 500 parts by weight or less, 101 parts by weight or more and 500 parts by weight or less, 200 parts by weight or more and 500 parts by weight or less, 300 parts by weight or more and 500 parts by weight or less, 50 parts by weight or more and 400 parts by weight or less, 100 parts by weight or more and 400 parts by weight or less, 101 parts by weight or more and 400 parts by weight or less, 200 parts by weight or more and 400 parts by weight or less, or 300 parts by weight or more and 400 parts by weight or less with respect to 100 parts by weight of the ion conductive polymer.

When the first porous layer contains at least one compound of the nitrile-based compound or the ether-based compound, and the lithium salt in an amount of less than 50 parts by weight with respect to 100 parts by weight of the ion conductive polymer, the effect of increasing the amorphous region of the ion conductive polymer is reduced by the plasticity of at least one compound of the nitrile-based compound or the ether-based compound and the lithium salt. The solvation effect of the lithium salt due to the high dielectric constant of the lithium salt and at least one compound of the nitrile-based compound or the ether-based compound is reduced, which may cause a problem in that the resistance is increased.

In addition, when the first porous layer contains at least one compound of the nitrile-based compound or the ether-based compound, and the lithium salt in an amount of more than 1000 parts by weight with respect to 100 parts by weight of the ion conductive polymer, the structural properties of the ion conductive polymer matrix is degraded, which may result in deterioration of mechanical properties.

In one embodiment of the present invention, the first porous layer may contain less than 0.0001 parts by weight of inorganic fine particles with respect to the total weight of the first porous layer. Containing less than 0.0001 parts by weight of inorganic fine particles with respect to the total weight of the first porous layer may mean that the first porous layer does not contain inorganic fine particles.

As mentioned above, the first porous layer may have a porosity of 10% or less. When the inorganic fine particles are excessively contained in the formation of the porous layer, a large number of pores may be formed due to the difference in bonding force or degree of expansion with other components. The degree of pore formation may vary depending on the components contained in the porous layer. On the other hand, as the first porous layer contains a relatively low content of inorganic fine particles or other additional components contained in the first porous layer, such as an ion conductive polymer described below, it is possible to have a low porosity in a numeric value as described above.

In the electrode for a lithium secondary battery of one embodiment of the present invention, the first porous layer may optionally further include a binder resin in addition to the ion conductive polymer. As the first porous layer includes a binder resin, the adhesive force of the first porous layer can be improved.

In one embodiment of the present invention, when the first porous layer includes a binder resin, the first porous layer may include 1 part by weight or more and 50 parts by weight or less of the binder resin with respect to 100 parts by weight of the ion conductive polymer. As the first porous layer includes 1 part by weight or more and 50 parts by weight or less of the binder resin with respect to 100 parts by weight of the ion conductive polymer, the porosity of the first porous layer can satisfy 10% or less.

Specifically, the first porous layer contains the binder resin in an amount of 1 part by weight or more, 5 parts by weight or more, 50 parts by weight or less, 30 parts by weight or less, 25 parts by weight or less, or 20 parts by weight with respect to 100 parts by weight of the ion conductive polymer, and may contain it in an amount of 1 part by weight or more and 50 parts by weight or less, 1 part by weight or more and 30 parts by weight or less, 1 part by weight or more and 25 parts by weight or less, 1 part by weight or more and 20 parts by weight or less, 5 parts by weight or more and 50 parts by weight or less, 5 parts by weight or more and 30 parts by weight or less, 5 parts by weight or more and 25 parts by weight or less, or 5 parts by weight or more and 20 parts by weight or less.

When the first porous layer contains less than 1 part by weight of the binder resin based on 100 parts by weight of the ion conductive polymer, the adhesive properties may be degraded due to the decrease in the degree of surface binder exposure, and cell properties may be degraded due to the decrease in adhesive force of the porous layer/electrode interface. When the first porous layer contains more than 50 parts by weight of the binder resin with respect to 100 parts by weight of the ion conductive polymer, the cell internal resistance may be increased due to a decrease in ionic conductivity of the first porous layer.

The binder resin of the first porous layer may be any one selected from the group consisting of polyvinylidene fluoride, polyvinylidene fluoride-hexafluoro propylene, polyvinylidene fluoride-trichloroethylene, polyvinylidene fluoride-chlorotrifluoro ethylene, polymethyl methacrylate, polyacrylonitrile, polyvinylpyrrolidone, polyvinyl acetate, ethylene vinyl acetate copolymer, polyethylene oxide, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile-styrene-butadiene copolymer, polyurethane, polyacrylic acid, polyimide, and styrene butadiene rubber, or a mixture of two or more thereof.

Meanwhile, the second porous layer may include a binder resin and inorganic fine particles.

By adjusting the size of the inorganic fine particles, the content of the inorganic fine particles, and the content of the binder resin, the second porous layer can form pores in a micro unit and can adjust the pore size and porosity. That is, as the second porous layer contains the binder resin and the inorganic fine particles, the porosity of the second porous layer can satisfy 30% or more.

The inorganic fine particles are a main component forming the second porous layer, and empty spaces exist between the inorganic fine particles, which not only serve to form fine pores, but also serve as a kind of spacer capable of maintaining the physical shape of the second porous layer.

The inorganic fine particles may include inorganic fine particles having a particle size of 10 nm or more and 10 $\mu$m or less. The particle size of the inorganic fine particles can be confirmed through a scanning electron microscope image (SEM) or a transmission electron microscope image (TEM) taken from the cross section of the second porous layer.

Specifically, the inorganic fine particles may include inorganic fine particles having a particle size of 10 nm or more, 100 nm or more, 10 $\mu$m or less, 1 $\mu$m or less, 900 nm or less, 800 nm or less, 700 nm or less, 500 nm or less, and may be 10 nm or more 10 $\mu$m or less, 10 nm or more 1 $\mu$m or less, 10 nm or more 900 nm or less, 10 nm or more 800 nm or less, 10 nm or more and 700 nm or less, 10 nm or more and 500 nm or less, 100 nm or more and 10 $\mu$m or less, 100 nm or more and 1 $\mu$m or less, 100 nm or more and 900 nm or less, 100 nm or more and 800 nm or less, 100 nm or more and 700 nm or less, or 100 nm or more and 500 nm or less.

When the particle size of the inorganic fine particles is less than 10 nm, the dispersibility is lowered and it is not easy to adjust the physical properties of the porous layer. When the particle size is more than 1 $\mu$m, the thickness of the porous layer increases, the mechanical physical properties may deteriorate, and due to excessively large pore size the probability of an internal short circuit occurring during charge and discharge of the battery becomes high.

In addition, the inorganic fine particles may have a D50 of 10 nm or more and 1 $\mu$m or less. The D50 may refer to the value of the particle diameter at 50% in the cumulative distribution of particle size diameters, in order from the smallest one on the basis of mass, among particle diameters measured by a laser diffraction scattering particle size distribution measuring apparatus.

Specifically, the inorganic fine particles have a D50 of 10 nm or more, 100 nm or more, 1 $\mu$m or less, 900 nm or less, 800 nm or less, 700 nm or less, 500 nm, and 10 nm or more and 1 $\mu$m or less, 10 nm or more and 900 nm or less, 10 nm or more and 800 nm or less, 10 nm or more and 700 nm or less, or 10 nm or more and 500 nm or less, 100 nm or more and 1 $\mu$m or less, 100 nm or more and 900 nm or less, 100 nm or more and 800 nm or less, 100 nm or more and 700 nm or less, or 100 nm or more and 500 nm or less.

When the average particle size (D50) of the inorganic fine particles is less than 10 nm, the dispersibility is lowered and it is not easy to adjust the physical properties of the porous layer. When the particle size is more than 1 $\mu$m, the thickness of the porous layer increases, the mechanical physical properties may deteriorate, and due to excessively large pore size, the probability of an internal short circuit occurring during charging and discharging of the battery becomes high.

In one embodiment of the present invention, the inorganic fine particles are not particularly limited as long as they are electrochemically stable. Specifically, the inorganic fine particles are not particularly limited as long as they do not undergo an oxidation and/or reduction reaction within the operating voltage range of the applied battery. In particular, when inorganic fine particles having ion transfer ability are used, the ion conductivity in the lithium secondary battery can be increased and the performance can be improved. In addition, when using inorganic particles having a high dielectric constant as the inorganic fine particles, it contributes to increasing the degree of dissociation of an electrolyte salt, such as a lithium salt, in the liquid electrolyte, which can improve the ionic conductivity of the electrolyte.

For example, the inorganic fine particles may include one or more types of inorganic fine particles selected from the group consisting of alumina($Al_2O_3$), boehmite(AlOOH), aluminum hydroxide($Al(OH)_3$), silica($SiO_z$), titania($TiO_2$), zirconia($ZrO_2$), zirconium titanate($ZrTiO_4$), lanthana($La_2O_3$), yttria($Y_2O_3$), strontium titanate ($SrTiO_3$), barium titanate ($BaTiO_3$), magnesia(MgO), magnesium hydroxide($Mg(OH)_2$), aluminosilicate($Al_2O_5Si$), zeolite, LLZO($Li_7La_3Zr_2O_{12}$), LATP($Li_{1+x}Al_xTi_{2-x}(PO_4)_3$ 0<x<2), and PZT($Pb[Zr_xTi_{1-x}]O_3$, $0 \leq x \leq 1$).

Further, the second porous layer may contain 50 parts by weight or more and 3000 parts by weight or less of the inorganic fine particles with respect to 100 parts by weight of the binder resin.

Specifically, the second porous layer may contain the inorganic fine particles in an amount of 50 parts by weight or more, 100 parts by weight or more, 110 parts by weight or more, 300 parts by weight or more, 500 parts by weight or more, 900 parts by weight or more, 3000 parts by weight or less, 2500 parts by weight or less, 2000 parts by weight or less, 1500 parts by weight or less, 1000 parts by weight or less, 50 parts by weight or more and 3000 parts by weight or less, 100 parts by weight or more and 3000 parts by weight or less, 110 parts by weight or more and 3000 parts by weight or less, 300 parts by weight or more and 3000 parts by weight or less, 500 parts by weight or more and 3000 parts by weight or less, 900 parts by weight or more and 3000 parts by weight or less, 50 parts by weight or more and 2500 parts by weight or less, 100 parts by weight or more and 2500 parts by weight or less, 110 parts by weight or more and 2500 parts by weight or less, 300 parts by weight or more and 2500 parts by weight or less, 500 parts by weight or more and 2500 parts by weight or less, 900 parts by weight or more and 2500 parts by weight or less, 50 parts by weight or more and 2000 parts by weight or less, 100 parts by weight or more and 2000 parts by weight or less, 110 parts by weight or more and 2000 parts by weight or less, 300 parts by weight or more and 2000 parts by weight or less, 500 parts by weight or more and 2000 parts by weight or less, 900 parts by weight or more and 2000 parts by weight or less, 50 parts by weight or more and 1500 parts by weight or less, 100 parts by weight or more and 1500 parts by weight or less, 110 parts by weight or more and 1500 parts by weight or less, 300 parts by weight or more and 1500 parts by weight or less, 500 parts by weight or more and 1500 parts by weight or less, 900 parts by weight or more and 1500 parts by weight or less, 50 parts by weight or more and 1000 parts by weight or less, 100 parts by weight or more and 1000 parts by weight or less, 110 parts by weight or more and 1000 parts by weight or less, 300 parts by weight or more and 1000 parts by weight or less, 500 parts by weight or more and 1000 parts by weight or less, or 900 parts by weight or more and 1000 parts by weight or less with respect to 100 parts by weight of the binder resin.

By adjusting the size of the inorganic fine particles, the content of the inorganic fine particles and the content of the binder resin, the second porous layer can form pores in a nano unit and can also adjust the pore size and porosity. That is, as the second porous layer includes 50 parts by weight or more and 3000 parts by weight or less of the inorganic fine particles with respect to 100 parts by weight of the binder resin, the porosity of the second porous layer can satisfy 30% or more.

When the second porous layer contains less than 50 parts by weight of the inorganic fine particles with respect to 100 parts by weight of the binder resin, the content of the binder resin is excessively increased, the empty space formed between the inorganic fine particles is reduced, which may result in a reduction in the pore size and porosity, which may deteriorate final battery performance. In addition, when the second porous layer contains more than 3000 parts by weight of the inorganic fine particles with respect to 100 parts by weight of the binder resin, the content of the binder resin is excessively reduced, the adhesive force between the inorganic fine particles becomes weak. Thus, the peeling resistance becomes weak, which may deteriorate the mechanical properties of the second porous layer.

In one embodiment of the present invention, the second porous layer may include a binder resin.

The binder resin of the second porous layer may be any one selected from the group consisting of polyvinylidene fluoride, polyvinylidene fluoride-hexafluoro propylene, polyvinylidene fluoride-trichloroethylene, polyvinylidene fluoride-chlorotrifluoro ethylene, polymethyl methacrylate, polyacrylonitrile, polyvinylpyrrolidone, polyvinyl acetate, ethylene vinyl acetate copolymer, polyethylene oxide, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile-styrene-butadiene copolymer, polyurethane, polyacrylic acid, polyimide, and styrene butadiene rubber, or a mixture or two or more thereof.

In one embodiment of the present invention, the ratio between the thickness of the first porous layer and the thickness of the second porous layer may be 1:1.1 to 1:20.

Specifically, in one embodiment of the present invention, the ratio between the thickness of the first porous layer and the thickness of the second porous layer may be 1:1.1 or more, 1:1.5 or more, 1:1.8 or more, 1:2 or more, 1:20 or less, 1:10 or less, 1:8 or less, 1:5 or less, or 1:1.1 or more and 1:20 or less, 1:1.1 or more and 1:10 or less, 1:1.1 or more and 1:8 or less, 1:1.1 or more and 1:5 or less, 1:1.5 or more and 1:20 or less, 1:1.5 or more and 1:10 or less, 1:1.5 or more and 1:8 or less, 1:1.5 or more and 1:5 or less, 1:1.8 or more and 1:20 or less, 1:1.8 or more and 1:10 or less, 1:1.8 or more and 1:8 or less, 1:1.8 or more and 1:5 or less, 1:2 or more and 1:20 or less, 1:2 or more and 1:10 or less, 1:2 or more and 1:8 or less, or 1:2 or more and 1:5 or less.

When the ratio between the thickness of the first porous layer and the thickness of the second porous layer is less than 1:1.1, it is difficult to secure heat resistance due to inorganic fine particles and adhesiveness due to the binder resin if the thickness of the second porous layer is too thin. The problem of increasing resistance may occur if the thickness of the second porous layer is excessively thick, because the ion conduction is more difficult when using an ion conductive polymer with the same thickness than ion conduction due to pores of a relatively porous layer.

Further, when the ratio between the thickness of the first porous layer and the thickness of the second porous layer exceeds 1:20, the thickness of the first porous layer is too thin or the thickness of the second porous layer is too thick, thereby degrading insulation characteristics and/or resistance characteristics of the battery.

In one embodiment of the present invention, the thickness of the first porous layer and the thickness of the second porous layer are not particularly limited, and can be adjusted to, for example, 0.01 to 100 $\mu$m in consideration of battery performance.

For example, the thickness of the first porous layer may be 0.1 $\mu$m or more and 10 $\mu$m or less, and the thickness of the second porous layer may be 5 $\mu$m or more and 30 $\mu$m or less.

More specifically, the thickness of the first porous layer may be 0.1 $\mu$m or more, 0.5 $\mu$m or more, 1 $\mu$m or more, 10 $\mu$m or less, 7 $\mu$m or less, 5 $\mu$m or less, and may be 0.1 $\mu$m or more and 10 $\mu$m or less, 0.5 $\mu$m or more and 10 $\mu$m or less, 1 $\mu$m or more and 10 ,um or less, 0.1 $\mu$m or more and 7 $\mu$m or less, 0.1 $\mu$m or more and 7 $\mu$m or less, 0.5 ,um or more and 7 $\mu$m or less, 1 $\mu$m or more and 7 $\mu$m or less, 0.1 $\mu$m or more and 5 ,um or less, 0.5 $\mu$m or more and 5 $\mu$m or less, or 1 $\mu$m or more and 5 $\mu$m or less.

When the thickness of the first porous layer is less than 0.1 $\mu$m, it does not play a role of protecting the electrode, and when the thickness exceeds 10 $\mu$m, the ionic conductivity decreases and the overall volume increases, which may decrease output characteristics, energy density, and the like.

Further, the thickness of the second porous layer may be 5 $\mu$m or more, 8 $\mu$m or more, 10 $\mu$m or more, 11 $\mu$m or more, 30 $\mu$m or less, 25 $\mu$m or less, 20 $\mu$m or less, and may be 5 $\mu$m or more and 30 $\mu$m or less, 5 $\mu$m or more and 25 $\mu$m or less, 5 $\mu$m or more and 20 $\mu$m or less, 8 $\mu$m or more and 30 $\mu$m or less, 8 $\mu$m or more and 25 $\mu$m or less, 8 $\mu$m or more and 20 $\mu$m or less, 10 $\mu$m or more and 30 $\mu$m or less, 10 $\mu$m or more and 25 $\mu$m or less, 10 $\mu$m or more and 20 $\mu$m or less, 11 $\mu$m or more and 30 $\mu$m or less, 11 $\mu$m or more and 25 $\mu$m or less, or 11 $\mu$m or more and 20 $\mu$m or less.

When the thickness of the second porous layer is less than 5 $\mu$m, technical problems may arise in that it is difficult to secure a uniform coating thickness during the coating process. When the thickness exceeds 30 $\mu$m, technical problems may arise in that factors of occurrence of cracks or the like increase during the drying process after coating.

Another embodiment of the present invention provides a method for manufacturing an electrode for a lithium secondary battery, comprising: applying a composition for forming a first porous layer on an electrode substrate and drying it, thereby forming a first porous layer on at least one surface of the electrode substrate; and applying a composition for forming a second porous layer including a binder resin and inorganic fine particles on the first porous layer and drying it, thereby forming a second porous layer, wherein the first porous layer has a porosity of 10% or less, and wherein the second porous layer has a porosity of 30% or more.

The electrode for a secondary lithium battery of the above-mentioned embodiment can be provided according to the manufacturing method of the electrode for a secondary lithium battery. The details of the electrode substrate, the first porous layer, and the second porous layer includes all of the contents described above.

In the step of applying a composition for forming a first porous layer on an electrode substrate and drying it, thereby forming a first porous layer on at least one surface of the electrode substrate, the composition for forming the first porous layer is applied to at least one surface of the electrode substrate. Then, the electrode substrate coated with the composition for forming the first porous layer can be dried to remove the first solvent contained in the composition for forming the first porous layer.

In the step of applying a composition for forming a second porous layer including a binder resin and inorganic fine particles on the first porous layer and drying it, thereby forming a second porous layer, a composition for forming a second porous layer is applied to one surface of the first porous layer. Then, it is dried to remove the second solvent contained in the composition for forming the second porous layer.

In the step of applying a composition for forming a first porous layer on an electrode substrate and drying it, thereby forming a first porous layer on at least one surface of the electrode substrate; and the step of applying a composition for forming a second porous layer including a binder resin and inorganic fine particles on the first porous layer and drying it, thereby forming a second porous layer, conventional coating methods known in the art can be used. For example, various methods such as spin coating, dip coating, die coating, roll coating, comma coating, gravure coating, bar coating, curtain coating, extrusion, casting, screen printing, inkjet printing, doctor blading, or a combination thereof can be used.

Further, in the manufacturing method of the electrode for a lithium secondary battery, the drying method is not particularly limited, and a known method can be used. As an example, a drying method by warm air, hot air, low humidity air, a vacuum drying method, or a drying method by irradiation of infrared rays and electron beams, etc. may be mentioned.

The solvent used in the composition for forming the first porous layer and the composition for forming the second porous layer preferably has a solubility index similar to that of the binder resin to be used and a low boiling point in order to facilitate uniform mixing and subsequent solvent removal. The first solvent is not particularly limited, but may be, for example, one or a mixture of two or more selected from the group consisting of acetone, tetrahydrofuran, methylene chloride, chloroform, dimethylformamide, N-methyl-2-pyrrolidone (NMP) and cyclohexane.

Meanwhile, according to yet another embodiment of the present invention, a lithium secondary battery comprising the electrode for a lithium secondary battery is provided.

Specifically, according to yet another embodiment of the present invention, a lithium secondary battery comprising the lithium secondary battery electrode, the counter electrode, and an electrolyte interposed therebetween is provided.

The details of the electrode for a lithium secondary battery includes all of the contents described above.

Specifically, the lithium secondary battery according to the above embodiment may include an electrode assembly wound with a separator interposed between a cathode and an anode, and a case that incorporates the electrode assembly. In addition, the cathode, the anode, and the separator can be impregnated with an electrolyte.

As mentioned above, instead of a porous polymer separator including a porous substrate and a coating layer formed on the porous substrate, the lithium secondary battery of the embodiment comprises a separator which includes a first porous layer, formed on the electrode substrate, and having a porosity of 10% or less; and a second porous layer formed on the first porous layer, containing a binder resin and inorganic fine particles, and having a porosity of 30% or more, whereby even if the electrode expands and contracts, it is possible to maintain the adhesive force and thus achieve excellent battery life characteristics.

The lithium secondary battery of the embodiment may further include a first porous layer contained in the electrode for a lithium secondary battery of another embodiment and optionally an adhesive layer for bonding between the cathodic or anodic counter electrodes.

The anode may include an anode material including an anode active material, a conductive material and a binder; and a current collector supporting the anode material.

The anode active material may include a material capable of reversibly intercalating and deintercalating lithium ions, a lithium metal, a lithium metal alloy, a material capable of doping and dedoping lithium, and a transition metal oxide.

As the material capable of reversibly intercalating and de-intercalating lithium ions, crystalline carbon, amorphous carbon, or a mixture thereof may be exemplified as a carbonaceous material. Specifically, the carbonaceous material may be natural graphite, artificial graphite, Kish graphite, pyrolytic carbon, mesophase pitches, mesophase pitch based carbon fiber, meso-carbon microbeads, petroleum or coal tar pitch derived cokes, soft carbon, hard carbon, and the like.

The lithium metal alloy may include an alloy of lithium and a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material capable of doping and dedoping lithium may include Si, a Si-C composite, $SiO_x$ (0<x<2), a Si-Q alloy (wherein Q is an element selected from the group consisting of alkali metals, alkali earth metals, group 13 elements, group 14 elements, group 15 elements, group 16 elements, transition metals, rare earth elements, and a combination thereof, but is not Si), Sn, $SnO_2$, Sn-R (wherein R is an element selected from the group consisting of alkali metals, alkali earth metals, group 13 elements, group 14 elements, group 15 elements, group 16 elements, transition metals, rare earth elements, and a combination thereof, but is not Sn), and the like. In addition, for the material capable of doping and dedoping lithium, at least one of the above examples can also be mixed with $SiO_2$ and then used. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and the like.

And, the transition metal oxide may include vanadium oxide, lithium vanadium oxide, lithium titanium oxide, and the like.

The anode current collector is generally fabricated to have a thickness of 3 to 500 $\mu$m. Such an anode current collector is not particularly limited as long as it has high conductivity without causing chemical changes to the corresponding battery. For example, copper, stainless steel, aluminum, nickel, titanium, calcined carbon, copper, or stainless steel having a surface treated with carbon, nickel, titanium, silver, etc., aluminum-cadmium alloy, and the like may be used. In addition, similarly to the cathode current collector, the anode current collector may be processed to form fine irregularities on the surface thereof so as to enhance adhesion to the anode active material, and the current collector can be used in various forms such as a film, a sheet, a foil, a net, a porous body, a foaming body, and a non-woven fabric structure.

Preferably, the anode may include an anode active material including at least one of a carbonaceous material or a silicon compound.

Here, the carbonaceous material is a material containing at least one selected from the group consisting of natural graphite, artificial graphite, Kish graphite, pyrolytic carbon, mesophase pitches, mesophase pitch based carbon fiber, meso-carbon microbeads, petroleum or coal tar pitch derived cokes, soft carbon, and hard carbon, as previously exemplified. In addition, the silicon compound may be a compound containing Si previously exemplified, that is, Si, a Si-C composite, SiOx (wherein 0<x<2), the Si-Q alloy, mixtures thereof, or a mixture of at least one thereof and $SiO_2$.

Further, the anode may include micro silicon. When the anode includes micro silicon, it is possible to realize a superior capacity compared to the case where a carbonaceous material is used as an anode active material. Specifically, when a specific micro silicon is used as the silicon compound, it is possible to maintain a remaining capacity of 80% or more even after charging and discharging 500 times or more and realize significantly superior energy density to conventional lithium secondary batteries. Further, when the anode includes micro silicon, the charge/discharge life of a solid battery using a solid electrolyte can be greatly increased, and the charging speed at room temperature can also be greatly improved.

The size of the micro silicon is not particularly limited, but for example, the micro silicon may have a diameter of 100 $\mu$m or less, or a diameter of 1 to 100 $\mu$m, or a diameter of 1 to 20 $\mu$m.

According to one embodiment of the present invention, the anode active material may be contained in an amount of 85% to 98% by weight relative to the total weight of the anode material.

Specifically, the content of the anode active material may be 85% by weight or more, or 87% by weight or more, or 90% by weight or more; and 98% by weight or less, or 97% by weight or less, or 96% by weight or less relative to the total weight of the anode material.

Preferably, the content of the anode active material may be 85% by weight to 98% by weight, 87% by weight to 98% by weight, 90% by weight to 98% by weight, 85% by weight to 97% by weight, 87% by weight to 97% by weight, 90% by weight to 97% by weight, 85% by weight to 96% by weight, 87% by weight to 96% by weight, 90% by weight to 96% by weight relative to the total weight of the anode material.

The conductive material is used to impart conductivity to the electrode.

The conductive material can be used without particular limitation as long as it has electronic conductivity without causing chemical changes in the battery. As a non-limiting example, the conductive material may include carbon-based materials such as carbon black, acetylene black, ketjen black, channel black, furnace black, lamp black, thermal black, carbon graphene and carbon fiber; graphite such as natural graphite and artificial graphite; metal powder or metal fibers such as copper, nickel, aluminum, and silver; conductive whiskey such as zinc oxide and potassium titanate; conductive metal oxides such as titanium oxide; or a conductive polymer such as a polyphenylene derivative. For the conductive material, any one alone or a mixture of two or more of the above-mentioned examples may be used.

The content of the conductive material may be adjusted within a range that does not cause a decrease in capacity of the battery while exhibiting an appropriate level of conductivity. Preferably, the content of the conductive material may be 0.5% to 10% by weight, or 1% to 10% by weight, or 1% to 5% by weight with respect to the total weight of the anode material.

The binder is used to properly attach the anode material to the current collector.

As a non-limiting example, the binder may include polyvinylidenefluoride (PVdF), a polyvinylidenefluoride-hexafluoropropylene copolymer(PVdF-co-HFP), polyvinyl alcohol, polyacrylonitrile, carboxymethylcellulose(CMC), starch, hydroxypropylcellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber (SBR), fluorine rubber, and the like. For the binder, any one alone or a mixture of two or more of the above-mentioned examples may be used.

The content of the binder may be adjusted within a range that does not cause a decrease in battery capacity while exhibiting an appropriate level of adhesiveness. Preferably, the content of the binder may be 0.5% to 10% by weight, 1% to 10% by weight, or 1% to 5% by weight with respect to the total weight of the anode material.

The separator separates the cathode and the anode and provides a passage for lithium ions to move. In one embodiment of the present invention, the first porous layer and the second porous layer may function as a separator. In one embodiment of the present invention, as the first porous layer and the second porous layer are formed directly on the anode, the lithium secondary battery of one embodiment may include a separator that does not include a porous polymer substrate.

The lithium secondary battery of the above embodiment may optionally include a porous polymer substrate. The type of the porous polymer substrate is not particularly limited, but for example, at least one polymer selected from the group consisting of polyethylene, polypropylene, polyethyleneterephthalate, polybutyleneterephthalate, polyester, polyacetal, polyamide, polycarbonate, polyimide, polyetheretherketone, polyaryletherketone, polyetherimide, polyamideimide, polybenzimidazole, polyethersulfone, polyphenyleneoxide, cyclic olefin copolymer, polyphenylenesulfide and polyethylenenaphthalene, or a polymer substrate formed of a mixture of two or more thereof, or multilayers, woven fabrics, non-woven fabrics, etc. thereof may be used.

In the porous polymer substrate, the type and thickness of the substrate, the size and number of pores, and the thickness of ultra-fine yarn, especially in the case of nonwoven fabric, etc. can be adjusted in consideration of the melting temperature, manufacturing convenience, porosity, ion migration, insulation, etc.

In one embodiment of the present invention, the thickness of the porous polymer substrate is not particularly limited, and can be adjusted to, for example, 0.01 to 100 $\mu$m in consideration of battery performance.

The cathode for a lithium secondary battery may comprise a cathode material including a cathode active material, a binder, a conductive material, and a cathode additive; and a current collector supporting the cathode material.

The cathode additive for a lithium secondary battery has a property of irreversibly releasing lithium during charging and discharging of the lithium secondary battery. Therefore, the cathode additive for a lithium secondary battery may be included in a cathode for a lithium secondary battery and serve as a sacrificial cathode material for prelithiation.

Specifically, the cathode can be manufactured by coating a cathode mixture onto a cathode current collector and then drying it, and if necessary, a filler can be further added to the mixture.

Preferably, the cathode for a lithium secondary battery comprises a cathode material, including a cathode active material, a conductive material, the sacrificial cathode material, and a binder, and a current collector supporting the cathode material.

As it goes toward higher capacity batteries, the ratio of the anode active material in the anode must be higher in order to increase the capacity of the battery, which also increases the amount of lithium consumed in the SEI layer. Therefore, the design capacity of the battery can be determined by calculating the amount of lithium consumed in the SEI layer of the anode and then back-calculating the amount of the sacrificial cathode material to be applied to the cathode.

According to one embodiment of the present invention, the sacrificial cathode material may be contained in an amount of more than 0% by weight and less than 15% by weight relative to the total weight of the cathode material.

In order to compensate for the irreversible lithium consumed in the formation of the SEI layer, the content of the sacrificial cathode material is preferably more than 0% by weight relative to the total weight of the cathode material.

However, when the sacrificial cathode material is excessively contained, the content of the cathode active material showing reversible charge/discharge capacity decreases, the capacity of the battery decreases, and the residual lithium in the battery is plated on the anode, causing a short circuit of the battery or impairing safety. Therefore, the content of the sacrificial cathode material is preferably 15% by weight or less relative to the total weight of the cathode material.

Specifically, the content of the sacrificial cathode material may be more than 0% by weight, or more than 0.5% by weight, or 1% by weight or more, or 2% by weight or more, or 3% by weight or more; and 15% by weight or less, or 12% by weight or less, or 10% by weight or less relative to the total weight of the cathode material.

Preferably, the content of the sacrificial cathode material may be 0.5% by weight to 15% by weight, or 1% by weight to 15% by weight, or 1% by weight to 12% by weight, or 2% by weight to 12% by weight, or 2% by weight to 10% by weight, or 3% by weight to 10% by weight relative to the total weight of the cathode material.

For the cathode active material, compounds known to be applicable to lithium secondary batteries in the technical field to which the present disclosure pertains can be used without particular limitation.

As a non-limiting example, the cathode active material may include NCM($Li[Ni,Co,Mn]O_2$), NCMA($Li[Ni,Co,Mn,Al]O_2$), $LiCoO_2$, $LiNiO_2$, $LiMnO_2$, $LiMn_2O_2$, $LiNi_{1-d}Co_dO_2$, $LiCo_{1-d}Mn_dO_2$, $LiNi_{1-d}Mn_dO_2$ (wherein $0 \leq d < 1$), $Li(Ni_aCo_bMn_c)O_4$ ($0<a<2$, $0<b<2$, $0<c<2$, $a+b+c=2$), $LiMn_{2-e}Ni_eO_4$, $LiMn_{2-e}Co_eO_4$ (wherein $0 < e < 2$), $LiCoPO_4$, $LiFePO_4$, and the like. For the cathode active material, one or a mixture of two or more of the above-mentioned examples may be used.

According to one embodiment of the present invention, the cathode active material may be contained in an amount of 80% to 98% by weight relative to the total weight of the cathode material.

Specifically, the content of the cathode active material may be 80% or more, or 85% or more, or 90% or more, or 95% or more; and 98% by weight or less relative to the total weight of the cathode material.

Preferably, the content of the cathode active material may be 80% by weight or more and 98% by weight or less, or 85% by weight or more and 98% by weight or less, or 90% by weight or more and 98% by weight or less relative to the total weight of the cathode material.

The cathode for a lithium secondary battery can be formed by stacking a cathode material including the cathode active material, the conductive material, the sacrificial cathode material, and a binder on the current collector.

The filler is selectively used as a component that suppresses expansion of the cathode and is not particularly limited as long as it is a fibrous material without causing chemical change in the battery. For example, olefinic polymers such as polyethylene and polypropylene; and fibrous materials such as glass fibers and carbon fibers are used.

The details of the conductive material, the binder, and the current collector included in the cathode material include all of the contents described above.

Meanwhile, the electrolyte can be used without particular limitation as long as it is known to be applicable to a lithium secondary battery in the technical field to which the present disclosure pertains. For example, the electrolyte may include an organic liquid electrolyte, an inorganic liquid electrolyte, a solid polymer electrolyte, a gel polymer electrolyte, a solid inorganic electrolyte, a molten inorganic electrolyte, an aqueous electrolyte, or the like.

The aqueous electrolyte is the one obtained by dissolving a salt in an aqueous solvent such as water or alcohol, and a lithium secondary battery using such an aqueous electrolyte offers advantages in terms of high ionic conductivity and safety of the aqueous electrolyte, and inexpensive in process and manufacturing cost. In addition, a battery using an aqueous electrolyte rather than a non-aqueous organic electrolyte has an advantage in terms of environment.

Specifically, the aqueous electrolyte may include an aqueous solvent and a lithium salt.

The aqueous solvent is a solvent containing water, and is not particularly limited, but may contain 1% by weight or more of water relative to the total weight of the aqueous solvent that constitutes the electrolyte. As the aqueous solvent, water may be used alone, or a solvent miscible with water may be used in combination.

The water-miscible solvent may be a polar solvent, and can include, for example, at least one selected from the group consisting of a C1-C5 alcohol and a C1-C10 glycol ether.

For example, the C1 to C5 alcohol may be at least one selected from the group consisting of methanol, ethanol, n-propanol, isopropanol, ethylene glycol, 1,2-propanediol, 1,3-propanediol, 1,2-butanediol, 1,3-butanediol, 1,4-butanediol, glycerol, and 1,2,4-butanetriol, but is not limited thereto.

Further, the C1-C10 glycol ether may be at least one selected from the group consisting of ethylene glycol monomethyl ether (MG), diethylene glycol monomethyl ether (MDG), triethylene glycol monomethyl ether (MTG), polyethylene glycol monomethyl ether (MPG), ethylene glycol monoethyl ether (EG), diethylene glycol monoethyl ether (EDG), ethylene glycol monobutyl ether (BG), diethylene glycol monobutyl ether (BDG), triethylene glycol monobutyl ether (BTG), propylene glycol monomethyl ether (MFG), and dipropylene glycol monomethyl ether (MFDG), but is not limited thereto.

The lithium salt contained In the electrolyte dissolves in the aqueous solvent and acts as a source of lithium ions in the battery, which enables basic operation of the lithium secondary battery and facilitates the movement of lithium ions between the cathode and the anode.

Specifically, the lithium salt includes $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiN(SO_2F)_2$ (LiFSI, lithium bis(fluorosulfonyl)imide), $LiCl$, $Lil$, $LiB(C_2O4)_2$, and the like. Preferably, the lithium salt may be $LiPF_6$, LiFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Alternatively, the electrolyte can comprise a non-aqueous organic solvent and a lithium salt.

The non-aqueous organic solvent can be used without any particular limitation as long as it can serve as a medium through which ions involved in the electrochemical reaction of the battery can move.

Specifically, the non-aqueous organic solvent includes an ester-based solvent such as methyl acetate, ethyl acetate, γ-butyrolactone, and ε-caprolactone; an ether-based solvent such as dibutyl ether and tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), and propylene carbonate (PC); an alcohol-based solvent such as ethyl alcohol and isopropyl alcohol; nitriles such as R-CN (wherein R is a C2 to C20 linear, branched or cyclic hydrocarbon group, which may contain a double-bonded aromatic ring or an ether bond); amides such as dimethylformamide; dioxolanes such as 1,3-dioxolane; sulfolane, and the like.

Among the above examples, a carbonate-based solvent can be preferably used as the non-aqueous organic solvent.

In particular, considering the charge and discharge performance of the battery and compatibility with the sacrificial cathode material, the non-aqueous organic solvent may be preferably a mixture of a cyclic carbonate having high ion conductivity and a high dielectric constant (e.g., ethylene carbonate and propylene carbonate) and a linear carbonate having low viscosity carbonates (e.g., ethyl methyl carbonate, dimethyl carbonate, and diethyl carbonate). In this case, mixing and using the cyclic carbonate and the linear carbonate at a volume ratio of 1:1 to 1:9 may be advantageous for achieving the above-mentioned performance.

In addition, as the non-aqueous organic solvent, a solvent in which ethylene carbonate (EC) and ethyl methyl carbonate (EMC) are mixed at a volume ratio of 1:2 to 1:10; or a solvent in which ethylene carbonate (EC), ethyl methyl carbonate (EMC) and dimethyl carbonate (DMC) are mixed in a volume ratio of 1~3:1~9:1 can be preferably used.

The lithium salt contained in the electrolyte is dissolved in the non-aqueous organic solvent and acts as a source of lithium ions in the battery, which enables basic operation of the lithium secondary battery and facilitates movement of lithium ions between the cathode and the anode.

Specifically, the lithium salt may include $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiN(SO_2F)_2$ (LiFSI, lithium bis(fluorosulfonyl)imide), $LiCl$, $Lil$, $LiB(C_2O4)_2$, and the like. Preferably, the lithium salt may be $LiPF_6$, LiFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Optionally, the electrolyte may contain additives for the purpose of improving battery life characteristics, suppressing decrease of capacity in the battery, improving battery discharge capacity, and the like.

For example, the additive may include a haloalkylene carbonate-based compound such as difluoroethylene carbonate; or pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride, and the like. The additive may be contained in an amount of 0.1% to 5% by weight with respect to the total weight of the electrolyte.

The lithium secondary battery of one embodiment may be a lithium ion battery, a lithium ion polymer battery, or a lithium polymer battery, depending on the type of electrolyte and/or the type of separator.

The liquid electrolyte may be a lithium salt-containing non-aqueous electrolyte. The lithium salt-containing non-aqueous electrolyte is composed of a non-aqueous electrolyte and lithium, and the non-aqueous electrolyte includes a non-aqueous organic solvent, an organic solid electrolyte, an inorganic solid electrolyte, and the like, but are not limited thereto.

The organic solid electrolyte may include polyethylene derivatives, polyethylene oxide derivatives, polypropylene oxide derivatives, phosphoric acid ester polymers, polyagitation lysine, polyester sulfide, polyvinyl alcohols, polyvinylidene fluoride, and polymers containing ionic dissociation groups.

As the inorganic solid electrolyte, nitrides, halides and sulfates of Li such as $Li_3N$, $Lil$, $Li_5NI_2$, $Li_3N$-$Lil$-$LiOH$,

LiSiO$_4$, LiSiO$_4$-LiI-LiOH, Li$_2$SiS$_3$, Li$_4$SiO$_4$, Li$_4$SiO$_4$-LiI-LiOH, and Li$_3$PO$_4$-Li$_2$S-SiS$_2$ may be used.

Additionally, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride or the like may be added to the non-aqueous electrolyte. If necessary, in order to impart incombustibility, the non-aqueous electrolyte may further contain halogen-containing solvents such as carbon tetrachloride and ethylene trifluoride. Further, in order to improve high-temperature storage characteristics, the non-aqueous electrolyte may further contain carbon dioxide gas or the like and may further contain fluoro-ethylene carbonate(FEC), propene sulfone(PRS) and the like.

In one specific example, the lithium salt-containing non-aqueous electrolyte can be prepared by adding a lithium salt such as LiPF$_6$, LiClO$_4$, LiBF$_4$, and LiN(SO$_2$CF$_3$)$_2$, to a mixed solvent of a cyclic carbonate such as EC or PC as a highly dielectric solvent and a linear carbonate such as DEC, DMC, or EMC as a low-viscosity solvent.

The lithium secondary battery can be used as an energy source having improved performance and safety in the field of portable electronic devices such as mobile phones, notebook computers, tablet computers, mobile batteries, and digital cameras; and the field of transport means such as electric vehicles, electric motorcycles, and personal mobility devices.

The lithium secondary battery may have various shapes such as a prismatic shape, a cylindrical shape, and a pouch shape.

The lithium secondary battery of another embodiment described above can be realized as a battery module including this as a unit cell, a battery pack including the battery module, and a device including the battery pack as a power source.

At this time, specific examples of the device may be an electric vehicle, a hybrid electric vehicle, a plug-in hybrid electric vehicle, and a system for power storage, but are not limited thereto.

In the above embodiment, after the step of applying a composition for forming a second porous layer on the first porous layer and drying it, thereby forming a second porous layer, the first porous layer and the second porous layer are coated, and then are assembled through a process such as winding or stacking (lamination), to which the electrolyte is then injected, thereby manufacturing a lithium secondary battery.

ADVANTAGEOUS EFFECTS

According to the present disclosure, an electrode for a lithium secondary battery that can realize high insulation characteristics and low resistance characteristics, a manufacturing method of the electrode for lithium secondary battery, and a lithium secondary battery can be provided.

EXAMPLES

Hereinafter, actions and effects of the present disclosure will be described in more detail with reference to specific examples of the present disclosure. However, these are for illustrative purposes only, and the scope of the present disclosure is not intended to be limited thereby.

**Example 1**

(1) Manufacture of negative electrode

1) Production of negative electrode substrate

Carbon-based and silicon-based powder as an anode active material, carbon black as a conductive material, styrene-butadiene rubber (SBR) and carboxymethyl cellulose (CMC) as a binder were added to N-methyl-2 pyrrolidone (NMP) as a solvent in amount of 95.5 wt.%, 1 wt.%, 2.5 wt.%, and 1 wt.%, respectively, to prepare an anode slurry. The anode slurry was applied to a copper (Cu) thin film as an anode current collector having a thickness of 10 $\mu$m, dried, and subjected to a roll press to produce a negative electrode substrate.

2) Formation of first porous layer

10 g of polyethylene oxide as an ion conductive polymer (weight average molecular weight: 100,000 g/mol to 1,000,000 g/mol, dielectric constant of 5 to 8), 2 g of LiTFSi and 30 g of succinonitrile were added to acetonitrile, and dissolved at 50°C for about 12 hours or more to prepare a composition for forming a first porous layer.

The composition for forming the first porous layer was coated onto the produced negative electrode substrate by a bar coating method under a humidity of 30%, and dried at 70°C to form a first porous layer (porosity: 8%) having a thickness of 2 $\mu$m.

3) Formation of second porous layer

3 g of polyvinylidene fluoride-hexafluoro propylene copolymer (PVdF-HFP) and 7 g of polyetherimide (PEI) was added to 170 g of N-methyl-2 pyrrolidone (NMP), and dissolved at 50°C for about 12 hours or more to prepare a binder polymer solution. 90 g of alumina powder (D50: 500 nm) (solid content: 30 wt.%) was added to the prepared polymer solution, and alumina powder was crushed and dispersed into 300 nm using a ball mill for 12 hours or more to prepare a composition for forming a second porous layer.
The composition for forming the second porous layer was coated onto the first porous layer by a bar coating method under a humidity of 30%, and dried at 100°C to form a second porous layer (porosity: 60%) having a thickness of 20 $\mu$m.

(2) Manufacture of positive electrode

97.5 wt.% of lithium nickel cobalt manganese aluminum-based oxide as a cathode active material, 1 wt.% of carbon black as a conductive material, and 1.5 wt.% of PVDF as a binder were added to N-methyl-2 pyrrolidone (NMP) as a solvent to prepare a cathode slurry. The cathode slurry was applied to an aluminum (Al) thin film as a cathode current collector having a thickness of 10 $\mu$m, and dried, and then subjected to a roll press to manufacture a positive electrode.

(3) Manufacture of batteries

The anode and the cathode on which the first porous layer and the second porous layer were formed were assembled using a stacking method, and electrolyte (ethylene carbonate (EC): ethylmethyl carbonate (EMC) = 3:7 (volume ratio), 1 mole of lithium hexafluorophosphate (LiPF6) was injected into the assembled battery to manufacture a lithium secondary battery.

**Example 2**

A lithium secondary battery was manufactured in the same manner as in Example 1, except that succinonitrile was not added in the preparation of the composition for forming the first porous layer.

**Example 3**

A lithium secondary battery was manufactured in the same manner as in Example 2, except that 10 g of polyvinylidene fluoride (weight average molecular weight: 500,000 g/mol to 1,000,000 g/mol, dielectric constant: 4 to 8) was added instead of polyethylene oxide in the preparation of the composition for forming the first porous layer.

**Example 4**

A lithium secondary battery was manufactured in the same manner as in Example 3, except that lithium salt (LiTFSi) was not added in the preparation of g the composition for forming the first porous layer.

**Comparative Example 1**

A lithium secondary battery was manufactured in the same manner as in Example 1, except that the anode and the cathode on which the second porous layer was formed without forming the first porous layer was assembled using a stacking method.

**<Experimental Example>**

**Experimental Example 1: Analysis of porous layer**

The thickness and porosity of the first porous layer and the second porous layer of the lithium secondary battery manufactured in Examples and Comparative Examples were analyzed, respectively, and shown in Table 1 below.
The porosity of the porous layer was calculated according to the following Equation 2 using the ratio between the actual density of the porous layer and the theoretical density of the solid content of the coating composition.

[Equation 2]

Porosity (%)= {1 - (Actual density)/(Theoretical density)} x 100.

[Table 1]

|  | First porous layer | | Second porous layer | |
|---|---|---|---|---|
|  | Thickness ($\mu$m) | Porosity (%) | Thickness ($\mu$m) | Porosity (%) |
| Example 1 | 2.9 | <1% | 14 | 39 |
| Example 2 | 2.9 | <1% | 13 | 36 |
| Example 3 | 1.0 | <1% | 15 | 47 |
| Example 4 | 1.4 | <1% | 15 | 46 |
| Comparative Example 1 | 0 | - | 15 | 47 |

As shown in Table 1, the first porous layer formed on the lithium secondary battery of Examples was shown to have a thickness of 1 $\mu$m to 3 $\mu$m and a porosity of 1% or less. In addition, the second porous layer formed on the lithium secondary battery of Examples was shown to have a thickness of 13 $\mu$m to 15 $\mu$m and a porosity of 30% or more and 50% or less.

**Experimental Example 2: Dielectric breakdown strength**

With respect to the anode for the lithium secondary battery manufactured in each of Examples and Comparative Examples, the maximum voltage allowed before dielectric breakdown occurred under a boosting speed of 100 V/sec was measured using a Hi-pot meter, the measured maximum voltage was divided by the thickness of the coating film, the maximum voltage allowed per unit thickness was calculated, and shown in Table 2 below.

**Experimental Example 3: EIS resistance (lithium ion resistance)**

With respect to the lithium secondary battery manufactured in each of Examples and Comparative Examples, the lithium ion resistance was measured by the Nyquist plot method using electrochemical impedance spectroscopy (EIS) under AC voltage amplitude of 10 mV and frequency of $10^4$ to $10^5$ Hz, and the results are shown in Table 2 below.

**Experimental Example 4: Peel strength**

With respect to the lithium secondary batteries of Examples and Comparative Examples, an adhesive tape was attached to the top of the first porous layer, bent at 180 degrees, and the peel strength between the first porous layer and the negative electrode substrate was measured. The results are shown in Table 2 below.

**Experimental Example 5: Battery Characteristics**

The lithium secondary batteries of Examples and Comparative Examples were cycled between 2.5 and 4.2 V at 0.1 C-rate at room temperature. Additionally, the charge capacity, discharge capacity and average discharge voltage during repeated cycles were measured through the capacity retention rate of the material during 5 cycles, and the results are shown in Table 3 below.

[Table 2]

|  | Dielectric breakdown strength (kV/mil) | EIS resistance (ohm) | Peel strength (gf/20mm) |
|---|---|---|---|
| Example 1 | 0.45 | 0.70 | >500 |
| Example 2 | 0.29 | 0.61 | 300 |

(continued)

|  | Dielectric breakdown strength (kV/mil) | EIS resistance (ohm) | Peel strength (gf/20mm) |
|---|---|---|---|
| Example 3 | 0.28 | 0.73 | >500 |
| Example 4 | 0.34 | 0.67 | >500 |
| Comparative Example 1 | 0.24 | 0.61 | 150 |

[Table 3]

|  | 1st cycle | | | 5th cycle | | | 5 cycle retention | |
|---|---|---|---|---|---|---|---|---|
|  | Discharge capacity (mAh/g) | Charge capacity (mAh/g) | Coulombic efficiency (%) | Discharge capacity (mAh/g) | Charge capacity (mAh/g) | Coulombic efficiency (%) | Discharge capacity retention rate (%) | Charge capacity retention rate (%) |
| Example 1 | 190.7 | 240.4 | 79.5 | 183.3 | 198.2 | 92.6 | 96.1 | 82.4 |
| Example 2 | 192.1 | 247.5 | 78.2 | 185.7 | 202.4 | 92.1 | 96.7 | 81.8 |
| Example 3 | 190.0 | 247.9 | 76.6 | 182.5 | 203.1 | 89.9 | 96.1 | 81.9 |
| Example 4 | 192.8 | 241.1 | 80.1 | 184.7 | 198.5 | 93.1 | 95.8 | 82.3 |
| Comparative Example 1 | 190.7 | 249.7 | 76.4 | 184.3 | 201.0 | 91.8 | 96.6 | 80.5 |

As shown in Tables 2 and 3, it was confirmed that as the lithium secondary battery of Example 1 includes a first porous layer containing a nitrile-based compound and having a porosity of 1% or less, uniform distribution of lithium salt, which is an ionic material, is induced, so that a dielectric breakdown strength appears at 0.45 kV/mil, thus realizing excellent insulation properties. In addition, it was confirmed that the lithium secondary batteries of Examples 1 to 4 include the first porous layer and the second porous layer, it realizes excellent insulation properties, does not delay charge capacity due to voltage increase during one-cycle charge, and has a coulombic efficiency of 76.6% or more and 80.1% or less, which is effective in improving the insulation.

Furthermore, as the lithium secondary battery of Examples includes the first porous layer and the second porous layer, not only does it realize excellent electrode substrate adhesion and insulation, which improves coulombic efficiency and charge retention rate, but also the increase in resistance appears to be not large, which ensures excellent charge/discharge capacity retention rate.

On the other hand, it was confirmed that in the case of Comparative Examples, the charge capacity retention rate after 5 cycles is only 80.5%, and the long-term life characteristics are not sufficient.

**Claims**

1. An electrode for a lithium secondary battery comprising:

   an electrode substrate;
   a first porous layer formed on the electrode substrate, wherein the first porous layer has a porosity of 10% or less; and
   a second porous layer formed on the first porous layer, wherein the second porous layer contains a binder resin and inorganic fine particles, and has a porosity of 30% or more.

2. The electrode for a lithium secondary battery according to claim 1, wherein a difference between the porosity of the first porous layer and the porosity of the second porous layer is 20% or more.

3. The electrode for a lithium secondary battery according to claim 1, wherein the porosity of the first porous layer is from 0.1% to 10%.

4. The electrode for a lithium secondary battery according to claim 1, wherein the porosity of the second porous layer is from 30% to 90%.

5. The electrode for a lithium secondary battery according to claim 1, wherein the inorganic fine particles include a particle size of 10 nm to 10 $\mu$m.

6. The electrode for a lithium secondary battery according to claim 1, wherein the inorganic fine particles comprises one or more of alumina, boehmite, aluminum hydroxide, silica, titania, zirconia, zirconium titanate, lanthana, yttria, strontium titanate, barium titanate, magnesia, magnesium hydroxide, aluminosilicate, zeolite, LLZO, LATP, or PZT.

7. The electrode for a lithium secondary battery according to claim 1, wherein the second porous layer contains from 50 parts by weight to 3000 parts by weight of the inorganic fine particles with respect to 100 parts by weight of the binder resin.

8. The electrode for a lithium secondary battery according to claim 1, wherein the first porous layer includes an ion conductive polymer.

9. The electrode for a lithium secondary battery according to claim 8, wherein the ion conductive polymer comprises one or more of polyethylene oxide, polyvinylidene fluoride, polyvinylidene fluoride-hexafluoropropylene, polymethyl(meth)acrylate, polyvinyl chloride, polyvinyl alcohol, polyacrylonitrile, polyacrylic acid, polyethylmeth(acrylate), or polycaprolactone.

10. The electrode for a lithium secondary battery according to claim 8, wherein the first porous layer includes a lithium salt.

11. The electrode for a lithium secondary battery according to claim 10, wherein the first porous layer contains from 5 parts by weight to 200 parts by weight of the lithium salt with respect to 100 parts by weight of the ion conductive polymer.

12. The electrode for a lithium secondary battery according to claim 10, wherein the first porous layer includes at least one of a nitrile-based compound or an ether-based compound.

13. The electrode for a lithium secondary battery according to claim 12, wherein the first porous layer contains from 50 parts by weight to 1000 parts by weight of at least one of the nitrile-based compound or the ether-based compound, and a lithium salt with respect to 100 parts by weight of the ion conductive polymer.

14. The electrode for a lithium secondary battery according to claim 1, wherein the first porous layer contains less than 0.0001 parts by weight of inorganic fine particles with respect to the total weight of the first porous layer.

15. The electrode for a lithium secondary battery according to claim 1, wherein the binder resin comprises at least one of polyvinylidene fluoride, polyvinylidene fluoride-hexafluoro propylene, polyvinylidene fluoride-trichloroethylene, polyvinylidene fluoride-chlorotrifluoro ethylene, polymethyl methacrylate, polyacrylonitrile, polyvinylpyrrolidone, polyvinyl acetate, ethylene vinyl acetate copolymer, polyethylene oxide, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile-styrene-butadiene copolymer, polyurethane, polyacrylic acid, polyimide, or styrene butadiene rubber.

16. The electrode for a lithium secondary battery according to claim 1, wherein a ratio of a thickness of the first porous layer to a thickness of the second porous layer is from 1: 1.1 to 1:20.

17. The electrode for a lithium secondary battery according to claim 1, wherein the thickness of the first porous layer is from 0.1 $\mu$m to 10 $\mu$m, and
the thickness of the second porous layer is from 5 $\mu$m to 30 $\mu$m.

18. A method for manufacturing an electrode for a lithium secondary battery, comprising:

applying a composition for forming a first porous layer on an electrode substrate and drying it, thereby forming a first porous layer on at least one surface of the electrode substrate; and
applying a composition for forming a second porous layer including a binder resin and inorganic fine particles on the first porous layer and drying it, thereby forming a second porous layer,
wherein the first porous layer has a porosity of 10% or less, and
wherein the second porous layer has a porosity of 30% or more.

19. A lithium secondary battery, comprising the electrode for a lithium secondary battery as set forth in claim 1.

## INTERNATIONAL SEARCH REPORT

| International application No. |
| --- |
| **PCT/KR2023/006833** |

### A. CLASSIFICATION OF SUBJECT MATTER

**H01M 4/13**(2010.01)i; **H01M 4/62**(2006.01)i; **H01M 4/139**(2010.01)i; **H01M 4/04**(2006.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/13(2010.01); H01M 10/052(2010.01); H01M 10/0525(2010.01); H01M 10/058(2010.01); H01M 2/14(2006.01); H01M 2/16(2006.01); H01M 4/04(2006.01); H01M 4/139(2010.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 다공성층(porous layer), 공극률(porosity), 바인더(binder), 무기입자(inorganic particle)

### C. DOCUMENTS CONSIDERED TO BE RELEVANT

| Category* | Citation of document, with indication, where appropriate, of the relevant passages | Relevant to claim No. |
| --- | --- | --- |
| A | JP 4419981 B2 (MITSUBISHI CHEMICAL CORP.) 24 February 2010 (2010-02-24)<br>See claim 1; and paragraphs [0033]-[0035]. | 1-19 |
| A | WO 2021-160222 A2 (RENA TECHNOLOGIES GMBH) 19 August 2021 (2021-08-19)<br>See claims 1-3. | 1-19 |
| A | KR 10-2017-0010664 A (LG CHEM, LTD.) 01 February 2017 (2017-02-01)<br>See claims 1-2. | 1-19 |
| A | KR 10-2021-0011432 A (24M TECHNOLOGIES, INC.) 01 February 2021 (2021-02-01)<br>See claims 1-4. | 1-19 |
| A | KR 10-2016-0050283 A (LG CHEM, LTD.) 11 May 2016 (2016-05-11)<br>See entire document. | 1-19 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 August 2023** | **23 August 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/006833**

| Patent document cited in search report | | | Publication date (day/month/year) | Patent family member(s) | | | Publication date (day/month/year) |
|---|---|---|---|---|---|---|---|
| JP | 4419981 | B2 | 24 February 2010 | JP | 2000-082496 | A | 21 March 2000 |
| | | | | JP | 2006-261129 | A | 28 September 2006 |
| | | | | JP | 4019518 | B2 | 12 December 2007 |
| WO | 2021-160222 | A2 | 19 August 2021 | CN | 115066765 | A | 16 September 2022 |
| | | | | DE | 102020103531 | A1 | 12 August 2021 |
| | | | | EP | 4104218 | A2 | 21 December 2022 |
| | | | | JP | 2023-512730 | A | 28 March 2023 |
| | | | | KR | 10-2022-0141330 | A | 19 October 2022 |
| | | | | TW | 202131541 | A | 16 August 2021 |
| | | | | US | 2023-0077095 | A1 | 09 March 2023 |
| | | | | WO | 2021-160222 | A3 | 07 October 2021 |
| KR | 10-2017-0010664 | A | 01 February 2017 | None | | | |
| KR | 10-2021-0011432 | A | 01 February 2021 | CN | 112166511 | A | 01 January 2021 |
| | | | | EP | 3804006 | A1 | 14 April 2021 |
| | | | | JP | 2021-526710 | A | 07 October 2021 |
| | | | | US | 2019-0363351 | A1 | 28 November 2019 |
| | | | | WO | 2019-227016 | A1 | 28 November 2019 |
| KR | 10-2016-0050283 | A | 11 May 2016 | KR | 10-1884247 | B1 | 30 August 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2023006833
- KR 1020220063562
- KR 1020230062527